**Europäisches Patentamt**

**European Patent Office**

**Office européen des brevets**

(11) Numéro de publication : **0 500 403 B1**

(12) **FASCICULE DE BREVET EUROPEEN**

(45) Date de publication du fascicule du brevet :
08.09.93 Bulletin 93/36

(51) Int. Cl.⁵ : **B60K 23/04**

(21) Numéro de dépôt : **92400145.6**

(22) Date de dépôt : **21.01.92**

(54) **Procédé et dispositif de régulation du glissement de traction des roues motrices d'un véhicule.**

(30) Priorité : **18.02.91 FR 9101893**

(43) Date de publication de la demande :
**26.08.92 Bulletin 92/35**

(45) Mention de la délivrance du brevet :
**08.09.93 Bulletin 93/36**

(84) Etats contractants désignés :
**DE GB IT**

(56) Documents cités :
**EP-A- 0 401 095**
**DE-A- 3 921 019**
**FR-A- 2 638 401**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Roy, Philippe**
**8, rue Cézanne**
**F-95240 Cormeilles en Parisis (FR)**

(74) Mandataire : **Pinchon, Odile et al**
**PSA Peugeot Citroen Département OPS/BPI**
**18, rue des Fauvelles**
**F-92250 La Garenne Colombes (FR)**

EP 0 500 403 B1

Jouve, 18, rue Saint-Denis, 75001 PARIS

## Description

La présente invention concerne un procédé de régulation du glissement de traction des roues motrices d'un véhicule automobile et un dispositif pour la mise en oeuvre de ce procédé.

Un différentiel est une partie mécanique de la transmission d'un véhicule permettant aux roues motrices de prendre en virage des vitesses de rotation différentes.

A cet effet, un véhicule à deux roues motrices possède un différentiel disposé entre les roues motrices. Un véhicule à quatre roues motrices possède trois différentiels, un pour le train avant, un autre pour le train arrière et enfin un troisième entre les trains avant et arrière du véhicule. Certains véhicules, pour une utilisation tout-terrain, possèdent une commande permettant de bloquer un ou plusieurs différentiels de façon à interdire tout patinage aux roues.

Les différentiels peuvent être libres ou autobloquants ou encore commandés.

Les voitures de série possèdent en général un différentiel libre. Toute vitesse différentielle entre les roues motrices est autorisée. En cas de roulage sur sol à faible adhérence, la motricité du véhicule est faible car lorsqu'une roue patine, tout le couple moteur se transmet à cette roue. Certains véhicules, en général plus sportifs, possèdent un différentiel autobloquant. Dans ce cas, lorsqu'une roue motrice patine, le différentiel tend à se bloquer et transmet une partie du couple moteur sur la roue quine patine pas. La motricité du véhicule est ainsi améliorée et la vitesse différentielle entre les roues motrices tend à se réduire. Cependant, les différentiels de ce type présentent un certain nombre d'inconvénients.

En effet, en l'absence de patinage, certains différentiels autobloquants possèdent un léger blocage résiduel. L'association de ces différentiels à un système d'anti-blocage de roues est alors extrêmement difficile à réaliser. Par ailleurs, certains différentiels autobloquants ont également un temps de réponse relativement important. Pour tous les différentiels autobloquants ou commandés mécaniquement, les lois qui régissent le fonctionnement du différentiel sont des lois mécaniques qu'il est difficile d'ajuster précisément. En outre une dispersion et une dérive des caractéristiques par usure dans le temps sont observées.

Il est également connu, par la demande de brevet français 2 638 401 un procédé et dispositif de pilotage de différentiel commandé qui permettent de faire varier la valeur nominale d'un paramètre de pilotage du différentiel selon une loi définie une fois pour toutes pour un véhicule donné. Un tel procédé et dispositif présentent l'inconvénient de ne pouvoir répondre aux besoins ressentis, de faire évoluer la loi de variation du paramètre de pilotage pour tenir compte, par exemple pour une voiture de course, de l'état de la route et de l'usure des pneus.

On connaît également, par la demande de brevet européen EP-A-0401095, un procédé de régulation du glissement de traction des roues motrices d'un véhicule automobile dont au moins deux roues motrices sont reliées au moteur du véhicule par l'intermédiaire d'un différentiel à verrouillage commandé par la valeur nominale d'un paramètre lu dans une table à deux entrées, en fonction de la vitesse du véhicule et la position d'un dispositif représentatif de la charge du moteur du véhicule, ladite valeur nominale étant modifiée selon une loi de modification comportant un coefficient multiplicatif qui évolue en fonction de la vitesse differentielle.

Un tel procédé présente cependant l'inconvénient de modifier la valeur nominale dès que la vitesse différentielle évolue, même faiblement ou de manière tout à fait transitoire.

Le but de l'invention est de résoudre ces problèmes en proposant un procédé et un dispositif de pilotage d'un différentiel commandé qui soit simple, fiable et d'un prix de revient peu élevé et dont les lois soient auto-adaptatives.

Ce but est atteint par le fait que le procédé de régulation du glissement de traction des roues motrices d'un véhicule dont au moins deux roues motrices sont reliées au moteur du véhicule par l'intermédiaire d'un différentiel à verrouillage commandé par la valeur nominale d'un paramètre lu dans une première table à deux entrées fournissant la valeur nominale à partir de la vitesse du véhicule et de la position d'un dispositif représentatif de la charge du moteur du véhicule, cette valeur nominale étant modifiée selon une loi de modification comportant un coefficient multiplicatif qui évolue en fonction de la valeur de la vitesse différentielle, est caractérisé en ce que à cette valeur nominale est appliquée la loi de modification qui comporte un coefficient multiplicatif évoluant en fonction de la comparaison de valeurs de la vitesse différentielle et de leur temps d'apparition avec une table gabarit.

Selon une autre particularité de l'invention, lorsque le gabarit de la répartition statistique de la vitesse différentielle dépasse le gabarit mémorisé dans la table gabarit, le coefficient multiplicatif varie en fonction du dépassement, de préférence entre 1 et 1,6..

Selon une autre particularité de l'invention, lorsque le gabarit de la répartition statistique de la vitesse différentielle est inférieur au gabarit mémorisé dans la table gabarit, le coefficient multiplicatif varie en fonction de la différence entre les deux gabarits, de préférence entre 0,6 et 1.

Selon une autre particularité de l'invention, la loi de modification du paramètre tient compte, d'une part de l'évolution de la vitesse différentielle par rapport à des seuils déterminés dans une deuxième table en fonction de la vitesse du véhicule et d'autre part dans des troisième, quatrième et cinquième tables en fonction de la vitesse du véhicule, de la vitesse différentielle et de la charge du moteur.

Selon une autre particularité, la loi de modification du paramètre est constituée par des incréments ou des décréments dont la taille est modifiée selon au moins une des lois de modification précédentes.

Selon une autre particularité, le paramètre de pilotage est une pression.

Selon une autre particularité, le procédé comporte les étapes suivantes :

- acquisition des paramètres représentatifs du glissement de traction et de charge du moteur ;
- calcul de la vitesse différentielle ;
- mémorisation du pourcentage du temps d'apparition des différentes valeurs de vitesse différentielles calculées pendant un temps déterminé ;
- calcul de la vitesse du véhicule ;
- lecture dans la table de la valeur nominale de pilotage du paramètre ;
- comparaison de la répartition statistique de la vitesse différentielle par rapport à un gabarit.
- comparaison de la vitesse différentielle par rapport à un seuil.

D'autres caractéristiques et avantages de la présente invention apparaîtront plus clairement à la lecture de la description ci-après faite en référence aux dessins annexés dans lesquels :

- la figure 1 représente un schéma synoptique d'un dispositif pour la mise en oeuvre du procédé selon l'invention;
- la figure 2 représente un organigramme illustrant le procédé de pilotage selon l'invention ;
- la figure 3 représente une première table mémorisée dans le calculateur ;
- la figure 4 représente une deuxième table mémorisée dans le calculateur ;

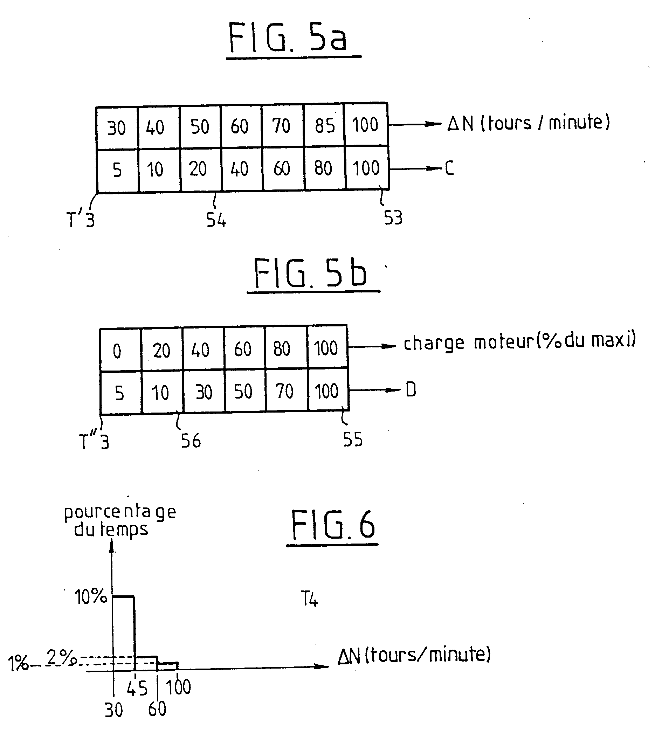

- la figure 5 représente une troisième table mémorisée dans le calculateur ;
- la figure 5a représente une quatrième table mémorisée dans le calculateur ;
- la figure 5b représente une cinquième table mémorisée dans le calculateur ;
- la figure 6 représente une sixième table mémorisée dans le calculateur.

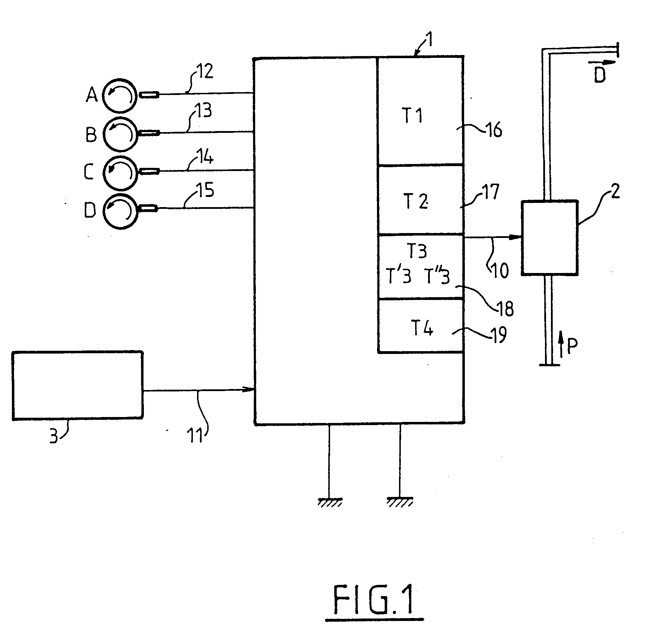

Le dispositif de la figure 1 comporte un calculateur (1) dont les mémoires permettent de mémoriser 6 tables (T1, T2, T3, T'3, T''3, T4) et dont une sortie (10) commande un actionneur (2) qui peut être une électrovanne, un moteur électrique à courant continu, un moteur électrique pas-à-pas, un actionneur pneumatique etc... Ce calculateur (1) reçoit sur ses entrées les signaux provenant de 4 capteurs inductifs associés à 4 roues phoniques (A, B, C, D) liées en rotation avec les roues du véhicules. Ce dispositif de mesure de la vitesse des 4 roues peut être remplacé éventuellement par les signaux issus d'un calculateur d'antiblocage ABS. Enfin ce calculateur (1) reçoit également

ment sur son entrée (11) un signal représentatif de la charge du moteur provenant d'un organe (3) qui peut être un capteur de position accélérateur, ou un capteur de position de papillon, ou un capteur de pression du turbo en cas de moteur suralimenté, ou un signal pris sur un injecteur en cas de moteur à injection ou une information issue du calculateur de contrôle du moteur etc... Dans le cas d'un moteur turbo avec injection c'est l'information de pression du turbo qui sera préférée.

Le procédé de régulation mis en oeuvre par le dispositif décrit ci-dessus va maintenant être explicité dans le cas où l'actionneur (2) est une électrovanne, c'est-à-dire lorsque la grandeur physique qui agit sur le différentiel est une pression hydraulique et dans le cas où le véhicule possède deux roues avant motrices. On pourra aisément transposer le fonctionnement et l'enseignement de l'invention au cas d'autres actionneurs et/ou de véhicules possédant 2 roues arrière motrices ou 4 roues motrices. On rappellera préalablement que la vitesse différentielle du train moteur est la différence de vitesse des roues du train moteur donnée par les capteurs (A) et (B) de la figure 1.

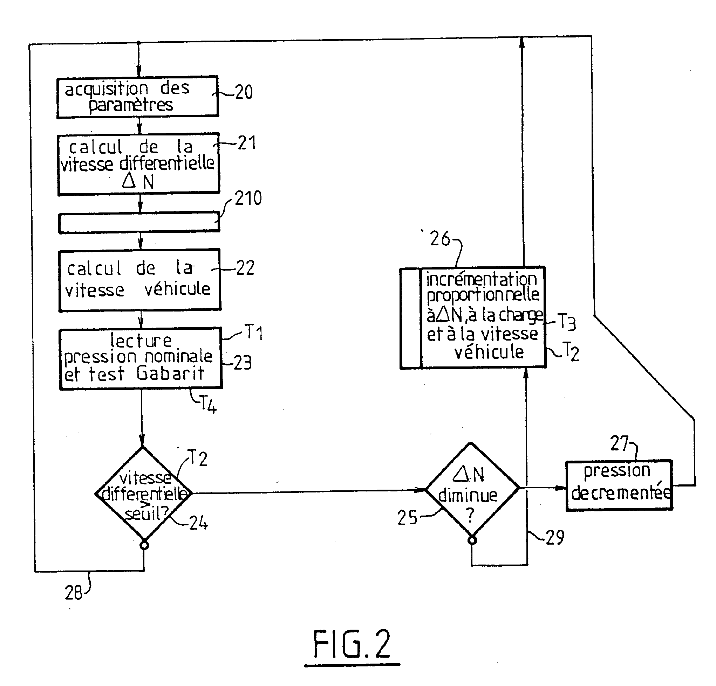

Une première étape du procédé, représentée à la figure 2, est constituée par une étape d'acquisition des paramètres, nécessaire à l'étape suivante (21) de calcul de la vitesse différentielle et à l'étape suivante (22) de calcul de la vitesse du véhicule. Dans le cas de 2 roues motrices, la vitesse du véhicule est $V = \dfrac{VC + VD}{2}$ Si on se trouvait dans le cas de quatre roues motrices, celle-ci serait $\dfrac{VA + VB + VC + VD}{4}$ ou Minimum (VA,VB,VC,VD)). Dans une étape intermédiaire (210) à ces deux étapes (21 et 22), le système mémorise le pourcentage de temps d'apparition de la vitesse différentielle calculée sur une durée déterminée, par exemple trois minutes. Une fois les deux calculs de vitesse effectués, le calculateur, à l'étape (23) détermine ce que l'on appelle la pression nominale d'action sur le différentiel par lecture d'une table (T1) mémorisée dans la mémoire du système (1). Cette table mémorisée (T1) dans la mémoire peut être représentée sous la forme d'un tableau matriciel dont les lignes du vecteur adresse représentent la charge du moteur en pourcentage du maximum et les colonnes du vecteur adresse représentent la vitesse du véhicule en kilomètre/heure et les cases d'adresse ainsi définies, la pression nominale de commande en pourcentage de la pression maximale disponible. Comme on peut le voir dans ce tableau, la pression nominale d'action sur le différentiel est plus élevée (case 301) lorsque la charge du moteur est élevée et que la vitesse est faible, c'est-à-dire lorsqu'on se trouve dans la situation d'un démarrage rapide. Cette pression nominale étant élevée, le différentiel est plus serré et le patinage est réduit. De cette façon, au démarrage on applique un taux de serrage très fort de façon à prévenir tout patinage intempestif. De même on peut voir sur le tableau qu'en cas de charge faible, de l'ordre de 0%, par exemple dû à un freinage, le taux de serrage (case 302) est inférieur à 10%, ce qui représente une valeur faible pour ne pas perturber le comportement du véhicule. On comprend facilement que par la modification aisée de cette table, notamment en fonction du véhicule auquel s'applique l'invention, on va modifier son comportement. Le faible taux de serrage en cas de charge faible, dû par exemple à un freinage, permet de ne pas perturber le fonctionnement du dispositif ABS si le véhicule en est équipé. La table ainsi stockée détermine la valeur nominale du paramètre de commande, par exemple ici la pression hydraulique, en fonction de la vitesse du véhicule et de la charge du moteur. Cette pression nominale permet de prévenir un éventuel patinage en maintenant le différentiel en permanence avec un certain taux de serrage. En cas de patinage, cette pression nominale sera corrigée, toujours en augmentation, de façon à stopper le patinage. Ce terme correctif sera comme on le verra ci-après, fonction de la vitesse différentielle et de la charge moteur ainsi que de la vitesse du véhicule.

A l'étape (23) de la figure 2, après avoir déterminé la pression nominale, le dispositif compare la vitesse différentielle évaluée à l'étape (21) et le pourcentage de temps d'apparition de cette valeur avec un gabarit mémorisé dans la table (T4) (table de gabarit de la répartition statistique de la vitesse différentielle).

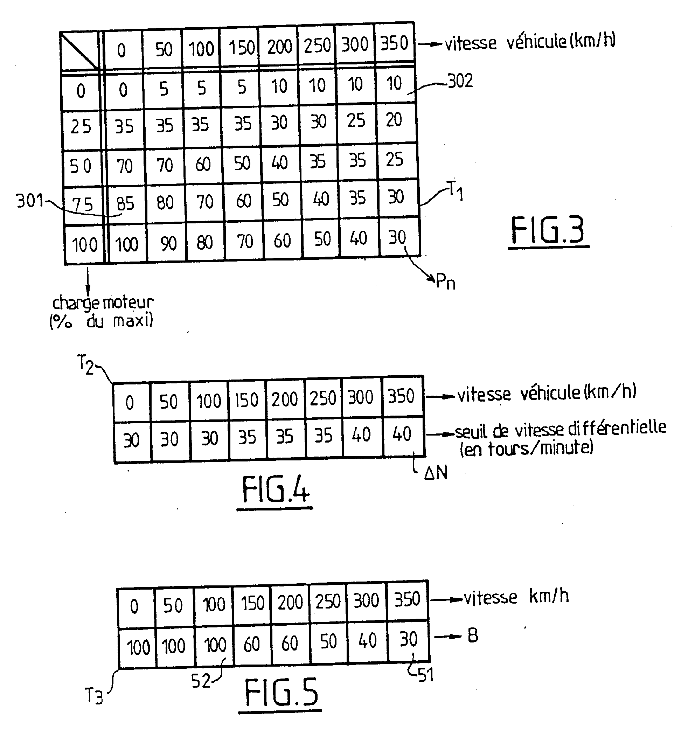

Enfin, à l'étape (24) le dispositif compare également la vitesse différentielle à un seuil qui est déterminé en fonction de la vitesse en km/heure du véhicule par une deuxième table (T2) (table du seuil toléré de vitesse différentielle), représentée à la figure 4. Cette table comporte, en fonction des vitesses du véhicule en km/heure, différents seuils de vitesse différentielle en tours/mn. Lorsque la vitesse différentielle déterminée à l'étape (21) du processus est supérieure au seuil, on incrémente la pression de commande déterminée par la première table (T1) avec une pente proportionnelle à la vitesse différentielle, à la charge du moteur et à la vitesse du véhicule. Les coefficients de proportionnalité à la vitesse du véhicule, à la vitesse différentielle et à la charge du moteur sont lus dans trois tables T3, T'3, T''3, tables des coefficients d'incrémentation de la pression en foction respectivement de la vitesse du véhicule, de la vitesse différentielle ou de la charge du moteur. Le coefficient B pondère l'accroissement de pression en étant plus faible à grande vitesse (voir case 51 par rapport à case 52). En effet, étant donné qu'à vitesse élevée on est sur un rapport de boîte plus long, le couple transmis aux roues est plus faible à charge moteur égale et une pente trop forte n'est pas souhaitable. Le coefficient C pondère l'accroissement de pression en étant plus faible à vitesse différentielle (voir case 53 par rapport à case 54). Le coefficient D pondère l'accroissement de pression en étant plus faible à faible charge du moteur (voir case 55 par rapport à case 56). Lorsqu'à l'étape (24) la vitesse différentielle est inférieure au seuil, le dispositif se reboucle immédiatement sur la première étape du processus et ne modifie pas la pression. A l'étape (25) le sens de variation de la vitesse différentielle AN est déterminé pour décider si la pression doit être réduite ou si elle doit être augmentée. Dès que la vitesse différentielle décroît, la pression est décrémentée avec une pente fixe, comme représenté par l'étape (27). Cette pente est de l'ordre de 20% de la pleine échelle par seconde mais, en aucun cas, la pression ne doit être inférieure à celle lue dans la table T1. En cas de vitesse différentielle inférieure au seuil, aucune correction n'est effectuée sur la pression, comme représenté par la boucle (28) de l'organigramme.

Lorsque la vitesse différentielle augmente, comme représenté par la branche (29) de l'organigramme, la pression de commande du différentiel est incrémentée de façon proportionnelle à la vitesse différentielle, à la charge et à la vitesse du véhicule.

Pour rendre cette loi auto-adaptable, la table (T1) peut être modifiée en fonction de certains facteurs si ceux-ci ne sont pas transitoires. En effet, il n'est pas souhaitable de trop serrer le pont en cas de roulage sur un sol sec si un patinage n'apparaît pas. De même, en cas de roulage sur un sol mouillé, il serait préférable d'augmenter légèrement la pression lue dans la table pour prévenir encore plus efficacement le risqué de patinage. Pour tenir compte de ces deux remarques, on mémorise un gabarit dans une table (T4) qui représente pour des valeurs données de vitesse différentielles le pourcentage du temps correspondant à l'apparition de ces vitesses. A l'étape (23), le système ayant fait l'acquisition des vitesses différentielles et ayant mémorisé à l'étape (210) le pourcentage de temps pendant lequel elles apparaissent au cours d'une durée déterminée, va comparer cette mesure au gabarit de la table (T4) pour en déduire le coefficient multiplicatif à appliquer sur la valeur de la pression nominale donnée par la première table (T1). Si les valeurs mesurées sont en dehors du gabarit, c'est que le patinage est trop important et il convient de le prévenir en augmentant la pression nominale, en multipliant celle-ci par un coefficient compris entre 1 et 1,6, par exemple, selon le dépassement du gabarit. Si les valeurs mesurées sont dans le gabarit, le patinage est très faible et le sol très adhérent. Il convient donc de ne pas serrer le pont inutilement et on applique un coefficient multiplicatif compris entre 0,6 et 1, par exemple, selon l'écart avec le gabarit. Ce dispositif auto-adaptatif est particulièrement intéressant sur les véhicules de course pour s'adapter aux changements d'adhérence en cours de course dûs aux variations des conditions climatiques telles que sol sec, pluie ou sol humide en cours de sèchage. Le système pourra ainsi faire évoluer la table principale (T1) et l'adapter aux conditions de roulage ce qui pourra permettre d'éviter un ou plusieurs changements de pneus durant la course. De même pour les véhicules de tourisme un peu sportifs, il est intéressant de s'adapter à des conditions d'adhérence différentes de la route.

La présente description a été faite en prenant comme paramètre de commande la pression hydraulique mais il est évident que le principe de l'invention s'applique à tout autre paramètre de commande électrique, mécanique, fluidique etc...

De même l'invention peut s'adapter à un véhicule à plusieurs différentiels.

**Revendications**

1. Procédé de régulation du glissement de traction des roues motrices (A, B) d'un véhicule automobile dont au moins deux roues motrices sont reliées au moteur du véhicule par l'intermédiaire d'un différentiel à verrouillage commandé par la valeur nominale d'un paramètre lu dans une première table (T1) à deux entrées, en fonction de la vitesse du véhicule et de la position d'un dispositif représentatif de la charge du moteur du véhicule, ladite valeur nominale étant modifiée selon une loi de modification comportant un coefficient multiplicatif qui évolue en fonction de la valeur de la vitesse différentielle, caractérisé en ce que ce coefficient multiplicatif évolue en fonction de la comparaison de valeurs de vitesse différentielle et de leur temps d'apparition avec une table gabarit (T4).

2. Procédé selon la revendication 1, caractérisé en ce que lorsque le gabarit de la répartition statistique de la vitesse différentielle dépasse le gabarit mémorisé dans la table gabarit (T4), le coefficient multiplicatif varie en fonction du dépassement.

3. Procédé selon la revendication 2, caractérisé en ce que le coefficient multiplicatif varie entre 1 et 1,6.

4. Procédé selon la revendication 1, caractérisé en ce que lorsque le gabarit de la répartition statistique de la vitesse différentielle est inférieur au gabarit mémorisé dans la table gabarit (T4), le coefficient multiplicatif varie en fonction de la différence entre les deux gabarits.

5. Procédé selon la revendication 4, caractérisé en ce que le coefficient multiplicatif varie entre 0, 6 et 1.

6. Procédé de régulation selon une des revendications 1 à 5, caractérisé en ce que la loi de modification du paramètre tient compte de l'évolution de la vitesse différentielle par rapport à des seuils déterminés dans une table (T2) en fonction de la vitesse du véhicule et dans des tables (T3, T'3, T''3) en fonction de la vitesse du véhicule, de la vitesse différentielle et de la charge du moteur par rapport à des seuils déterminés.

7. Procédé de régulation selon une des revendications précédentes, caractérisé en ce que la loi de modification est constituée par des incréments ou des décréments dont la taille est modifiée selon au moins une des lois de modification précédentes.

8. Procédé selon une des revendications précédentes, caractérisé en ce que la taille des décréments est constante.

9. Procédé selon une des revendications précédentes, caractérisé en ce que le paramètre de pilotage est une pression.

10. Procédé selon une des revendications précédentes, caractérisé en ce qu'il comporte les étapes suivantes :
   - acquisition (20) des paramètres représentatifs du glissement de traction et de charge du moteur ;
   - calcul de la vitesse différentielle (21) ;
   - mémorisation (210) du pourcentage du temps d'apparition des différentes valeurs de vitesse différentielles calculées pendant un temps déterminé ;
   - calcul de la vitesse du véhicule ;
   - lecture (23) de la pression nominale définie par une table ;
   - comparaison (23) de la répartition de la vitesse différentielle par rapport à un gabarit pour modifier la valeur de pression nominale par un coeffeicient ;
   - comparaison (24) de la vitesse différentielle mesurée à un seuil et détermination du sens de variation de la vitesse différentielle.

**Patentansprüche**

1. Verfahren zum Einstellen des Durchdrehens der Antriebsräder (A, B) eines Kraftfahrzeugs, bei dem wenigstens zwei Antriebsräder mit dem Fahrzeugmotor über ein Sperrdifferential verbunden sind, das durch den nominalen Wert eines Parameters gesteuert wird, der in einer ersten Tabelle (T1) mit zwei Eingängen gelesen wurde, in Abhängigkeit von der Geschwindigkeit des Fahrzeugs und der Stellung einer Vorrichtung, die der Last des Fahrzeugmotors entspricht, wobei der nominale Wert gemäß einer Modifikations- oder Veränderungsvorschrift verändert wird, die einen Multiplikationskoeffizenten aufweist, der sich in Abhängigkeit von dem Wert der Differentialgeschwindigkeit entwickelt, dadurch gekennzeichnet, daß dieser Multiplikationskoeffizient sich in Abhängigkeit von dem Vergleich der Werte der Differentialgeschwindigkeit und ihrer Auftrittszeit mit einer Schablonen- oder Mustertabelle (T4) entwickelt.

2. Verfahren nach Anspruch 1, dadurch gekennzeichnet, daß wenn der Musterwert der statistischen Verteilung der Differentialgeschwindigkeit den in der Mustertabelle (T4) gespeicherten Musterwert übersteigt, sich der Multiplikationskoeffizient in Abhängigkeit vom Übersteigen ändert.

3. Verfahren nach Anspruch 2, dadurch gekennzeichnet, daß der Multiplikationskoeffizient zwischen 1 und 1,6 schwankt.

4. Verfahren nach Anspruch 1, dadurch gekennzeichnet, daß wenn der Musterwert der statistischen Verteilung der Differentialgeschwindigkeit geringer ist als der Musterwert, der in der Mustertabelle (T4) gespeichert ist, sich der Multiplikationskoeffizient in Abhängigkeit des Unterschiedes zwischen den beiden Musterwerten ändert.

5. Verfahren nach Anspruch 4, dadurch gekennzeichnet, daß der Multiplikationskoeffizient zwischen 0,6 und 1 schwankt.

6. Einstellverfahren nach einem der Ansprüche 1 bis 5, dadurch gekennzeichnet, daß die Veränderungsvorschrift des Parameters die Entwicklung der Differentialgeschwindigkeit bezogen auf Schwellenwerte, die in einer Tabelle (T2) in Abhängigkeit von der Geschwindigkeit des Fahrzeugs festgelegt sind, und in Tabellen (T3, T'3, T''3) in Abhängigkeit von der Fahrzeuggeschwindigkeit, der Differentialgeschwindigkeit und der Motorlast bezüglich festgelegter Schwellenwerte, berücksichtigt.

7. Einstellverfahren nach einem der vorgehenden Ansprüche, dadurch gekennzeichnet, daß die Veränderungsvorschrift gebildet wird durch Inkremente oder Dekremente, deren Größe nach wenigstens einer der vorhergehenden Veränderungsvorschriften verändert wird.

8. Verfahren nach einem der vorhergehenden Ansprüche, dadurch gekennzeichnet, daß die Größe der Drekremente konstant ist.

9. Verfahren nach einem der vorhergehenden Ansprüche, dadurch gekennzeichnet, daß der Führungsparameter ein Druck ist.

10. Verfahren nach einem der vorhergehenden Ansprüche, dadurch gekennzeichnet, daß es die folgenden Schritte aufweist:
    - Erfassen (20) der repräsentativen Parameter des Durchdrehens und der Motorlast;
    - Berechnen der Differentialgeschwindigkeit (21);
    - Speichern (210) des Prozentsatzes der Auftrittszeit der verschiedenen Werte der Differentialgeschwindigkeit, die während einer vorbestimmten Zeit berechnet wurden;
    - Berechnen der Geschwindigkeit des Fahrzeugs;
    - Lesen (23) des Nominal- oder Nenndruckes, der von einer Tabelle definiert wird;
    - Vergleichen (23) der Verteilung der Differentialgeschwindigkeit bezüglich eines Musterwerts, um den Wert des nominalen Drucks durch einen Koeffizienten zu verändern;
    - Vergleichen (24) der gemessenen Differentialgeschwindigkeit mit einem Schwellenwert und Bestimmen der Richtung der Veränderung der Differentialgeschwindigkeit.

## Claims

1. Method of regulating the traction slipping of the driving wheels (A,B) of a motor vehicle in which at least two driving wheels are connected to the engine of the vehicle by means of a locking differential controlled by the nominal value of a parameter read in a first table (T1) with two entries, as a function of the speed of the vehicle and the position of a device representing the load of the vehicle engine, the said nominal value being altered in accordance with a law of modification comprising a multiplying coefficient which develops as a function of the value of the differential speed, characterised in that this multiplying coefficient develops as a function of the comparison of differential speed values and their appearance time with a gauge table (T4).

2. Method according to claim 1, characterised in that when the gauge of the statistical distribution of the differential speed exceeds the memorised gauge in the gauge table (T4), the multiplying coefficient varies as a function of the excess.

3. Method according to claim 2, characterised in that the multiplying coefficient varies between 1 and 1,6.

4. Method according to claim 1,characterised in that when the gauge of the statistical distribution of the differential speed is less than the memorised gauge in the gauge table (T4), the multiplying coefficient varies as a function of the difference between the two gauges.

5. Method according to claim 4,characterised in that the multiplying coefficient varies between 0,6 and 1.

6. Method of regulation according to one of claims 1 to 5,characterised in that the law of modification of the parameter takes account of the evolution of the differential speed in relation to thresholds determined in a table (T2) as a function of the speed of the vehicle and in tables (T3, T'3, T"3) as a function of the speed of the vehicle, of the differential speed and of the load of the engine in relation to determined thresholds.

7. Method of regulation according to one of the preceding claims,characterised in that the law of modification is formed by increments or decrements the size of which is modified according to at least one of the preceding laws of modification.

8. Method according to one of the preceding claims, characterised in that the size of the decrements is constant.

9. Method according to one of the preceding claims, characterised in that the controlling parameter is a pressure.

10. Method according to one of the preceding claims, characterised in that it comprises the following steps:
    - acquisition (20) of the representative parameters of the traction slipping and load of the engine;
    - calculation of the differential speed (21);
    - memorising (210) of the percentage of the appearance time of the different values of differential speed calculated during a determined time;
    - reading (23) of the nominal pressure defined by a table;
    - comparison (23) of the distribution of the differential speed in relation to a gauge in order to modify the nominal pressure value by a coefficient;
    - comparison (24) of the differential speed measured at a threshold and determination of the direction of variation of the differen-

tial speed.

FIG.1

acquisition des paramètres ──20

calcul de la vitesse differentielle $\triangle N$ ──21

210

calcul de la vitesse véhicule ──22

lecture pression nominale et test Gabarit ── T1 ──23

T4

vitesse differentielle > seuil? ── T2 ──24

$\triangle N$ diminue ? ──25

incrémentation proportionnelle à $\triangle N$, à la charge et à la vitesse véhicule ──26 ── T3 ── T2

pression decrementée ──27

28

29

## FIG.2

| | 0 | 50 | 100 | 150 | 200 | 250 | 300 | 350 | → vitesse véhicule (km/h) |
|---|---|---|---|---|---|---|---|---|---|
| 0 | 0 | 5 | 5 | 5 | 10 | 10 | 10 | 10 | 302 |
| 25 | 35 | 35 | 35 | 35 | 30 | 30 | 25 | 20 | |
| 50 | 70 | 70 | 60 | 50 | 40 | 35 | 35 | 25 | |
| 75 | 85 | 80 | 70 | 60 | 50 | 40 | 35 | 30 | $T_1$ |
| 100 | 100 | 90 | 80 | 70 | 60 | 50 | 40 | 30 | $P_n$ |

301

charge moteur
(% du maxi)

## FIG.3

$T_2$

| 0 | 50 | 100 | 150 | 200 | 250 | 300 | 350 | → vitesse véhicule (km/h) |
|---|---|---|---|---|---|---|---|---|
| 30 | 30 | 30 | 35 | 35 | 35 | 40 | 40 | → seuil de vitesse différentielle (en tours/minute) |

$\Delta N$

## FIG.4

| 0 | 50 | 100 | 150 | 200 | 250 | 300 | 350 | → vitesse km/h |
|---|---|---|---|---|---|---|---|---|
| 100 | 100 | 100 | 60 | 60 | 50 | 40 | 30 | → B |

$T_3$   52   51

## FIG.5

## FIG. 5a

| 30 | 40 | 50 | 60 | 70 | 85 | 100 | → ΔN (tours / minute) |
|----|----|----|----|----|----|-----|----|
| 5 | 10 | 20 | 40 | 60 | 80 | 100 | → C |

T'3          54          53

## FIG. 5b

| 0 | 20 | 40 | 60 | 80 | 100 | → charge moteur(% du maxi) |
|---|----|----|----|----|-----|----|
| 5 | 10 | 30 | 50 | 70 | 100 | → D |

T"3      56          55

pourcentage
du temps

## FIG. 6

T4

10%

1%   2%                              ΔN (tours/minute)

          45  100
     30   60